# EUROPÄISCHE PATENTSCHRIFT

(11) **EP 1 479 283 B1**
(45) Veröffentlichungstag und Bekanntmachung des Hinweises auf die Patenterteilung: **10.11.2010**
(21) Anmeldenummer: 04101581.9
(22) Anmeldetag: 16.04.2004
(51) Int. Cl.: A01F 15/07, B65B 57/02

(54) **Vorrichtung zum Überwachen des Laufs von bahnförmigem Material**
Monitoring device for the run of a sheet material
Dispositif de surveillance pour la marche d'un matériau en feuille

(30) Priorität: 20.05.2003 DE 10322543
(43) Veröffentlichungstag der Anmeldung: 24.11.2004
(73) Patentinhaber: DEERE & COMPANY, Moline, Illinois 61265-8098 (US)
(72) Erfinder: Biziorek, Stéphane, 70600, Champlitte (FR); Guiet, Lionel, 70100, Gray (FR)
(74) Vertreter: Magin, Ludwig Bernhard

(56) Entgegenhaltungen:
- EP-A- 1 310 154
- EP-A- 1 310 155
- WO-A-98/41450
- US-A- 5 884 453
- US-A- 6 125 702
- US-A1- 2002 091 476

## Beschreibung

Die Erfindung betrifft eine Wickelvorrichtung zum Überwachen des Laufs von bahnförmigem Material zwischen zwei beabstandeten Stellen in dem Bahnlauf mittels eines Sensors.

Die DE C1 197 55 605 offenbart eine Wickelvorrichtung für Erntegutballen, bei der ein Arm mit einer Streckvorrichtung um einen Erntegutballen gedreht wird und dabei auf die Oberfläche des Erntegutballens Streckfolie aufwickelt. Die Streckvorrichtung enthält eine schwenkbare Rolle, deren Schwenkbewegung von einem Hebel-Seilzugzusammenbau auf eine kippbare Lasche übertragen wird, die je nach der Stellung der Rolle wiederum in den Erkennungsbereich eines feststehenden Sensors gelangt oder nicht. Erfolgt an der Rolle keine Schwenkbewegung, stellt dies ein Signal dafür dar, dass keine Streckfolie mehr vorhanden ist oder dass sie gerissen ist.

Die EP 1 310 154 offenbart eine Steuervorrichtung einer Wickelvorrichtung mit einem Sender, der ein Signal aussendet, das auf eine Folie auftritt und von dieser reflektiert wird, und mit einem Empfänger, der dieses Signal gegebenenfalls auffängt. In dem Fall, dass der Empfänger kein Signal empfängt, geht die Steuervorrichtung davon aus, dass die Folie entweder gerissen oder aufgebraucht ist, und gibt ein Warnsignal oder aktiviert eine Reinigungsvorrichtung.

Diese bekannte Vorrichtung ist aufwendig und somit störanfällig.

Aus der US 5 884 453 geht eine Steuervorrichtung einer Filmwickelvorrichtüng hervor, bei der mittels eines Sensors die Geschwindigkeit des Folienabzugs so gesteuert wird, dass ein vorgegebener Geräuschpegel nicht überschritten wird; andererseits kann die Geschwindigkeit aber auch bis zu diesem Pegel angehoben werden.

Die WO 98/41450 A1 beschreibt und zeigt eine Wickelvorrichtung mit zwei Wickelarmen mit jeweils einer Folienrolle und einem zugeordneten Sensor. Die Sensoren erkennen, wenn von einer der Folienrollen keine Folie mehr abgezogen wird und senden ein entsprechendes Signal aus, das schließlich dazu führt, dass die Drehzahl der Wickelarme verdoppelt oder die des Wickeltischs halbiert wird, um schließlich die gleiche Überdeckung an Folienlagen zu erreichen.

Das der Erfindung zugrunde liegende Problem wird darin gesehen, dass einerseits ein hoher baulicher Aufwand dafür notwendig ist, andererseits aber keine Funktionsverbesserung im Falle gerissenen oder aufgebrauchten Materials auftritt.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann auf mechanische Glieder zum Erkennen oder Weiterleiten von Signalen oder auf Sender und Empfänger verzichtet werden. Des weiteren entfallen Probleme aufgrund von Toleranzen und mechanischen Einflüssen oder Witterungseinflüssen in der Bewegung des Hebel-Seilzugzusammenbaus. Vielmehr kann auch aus einer bestimmten Entfernung und in einer geschützten Umgebung mit einem als Mikrophon ausgebildeten Sensor das typische Geräusch erkannt werden. Dieses Geräusch ist anhand seiner Frequenz bzw. Frequenzspektrum und seiner Stärke zweifelsfrei zu erkennen. Werden unterschiedliche Materialien verwendet, z. B. Streckfolie, Wickelfolie, Netz oder dergleichen muss zunächst der Charakter des Geräuschs erfasst und festgelegt werden, damit er später mit einem "Prüfgeräusch" verglichen werden kann. Sobald trotz Betriebs der Wickelvorrichtung kein Geräusch entdeckt wird, muss davon ausgegangen werden, dass keine ordnungsgemäße Umwicklung des Wickelgegenstands erfolgt. Die beiden Stellen in dem Bahnlauf entsprechen vorzugsweise einerseits dem Wickelgegenstand und andererseits einer Abgabestelle für das Material, z. B. einer Vorratsrolle oder dergleichen. Wird die Abwesenheit von Folie festgestellt, erfolgt nicht nur eine Warnung, sondern eine Anpassung des Wickelbetriebs derart, dass entweder der Wickelbetrieb beendet oder die die Drehzahl des Wickelgegenstandes reduziert wird, so dass schließlich die gewünschte Überlappung der einzelnen Lagen gewahrt bleibt. Wenn der Sensor an dem Rahmen, also stationär, angebracht ist und jeweils nur ein Signal bildet, wenn sich der Rotor mit dem Material an ihm vorbei bewegt, ist keine Signalübertragung zwischen einem feststehenden und einem bewegten Teil z. B. mit Gleitringen oder dergleichen erforderlich, was die Zuverlässigkeit zusätzlich erhöht.

Wenn störende Umgebungseinflüsse vorhanden sind, ist es hilfreich, wenn ein Sensor bzw. Mikrophon verwendet wird, der auf Frequenzen im Ultraschallbereich reagiert. Auf diese Weise können auch übliche Geräusche bei der Bewegung eines Arms, der das Material trägt, oder von einer Maschine, an der diese Vorrichtung verwendet wird, nicht zu Fehlfunktionen führen.

Wenn der Sensor nicht nur in einer Ein-Aus-Charakteristik auf eine Warnvorrichtung wirken soll, um anzuzeigen, dass der Wickelbetrieb unterbrochen ist, sondern wenn zudem die Zuverlässigkeit des Signals erhöht werden und eventuell ein Eingriff in den Wickelprozess erfolgen soll, kann dies mit einer Signalverarbeitungsvorrichtung geschehen, in der das Signal vorzugsweise gefiltert und/oder in seiner Stärke verändert wird. Mittels einer solchen Signalverarbeitungsvorrichtung ist es nicht nur möglich, ein erkanntes Geräusch mit einem hinterlegten Referenzgeräusch zu vergleichen, sondern das aufgenommene Geräusch kann auch analysiert und als ausreichend oder nicht ausreichend anerkannt werden. Dabei ist zu beachten, dass die Umgebungstemperatur, Feuchtigkeit, Windrichtung und Zustand des Materials zu unterschiedlichen Geräuschen führen können. Die Signalverarbeitungsvorrichtung kann den gesamten Wickelprozess unterbrechen und zudem eine akustische oder optische Warnung verbreiten. Die Signalverarbeitungsvorrichtung kann als programmierbarer Rechner auf Soft- und Hardwarebasis ausgebildet werden oder als verdrahtete Schaltung aufgebaut sein.

Wenn Material nur an einer Stelle abgegeben wäre oder diese Abgabestelle ortsfest wäre, so dass der Sensor stets auf diese eine Stelle ausgerichtet werden könnte, könnte der Sensor nahezu beliebig positioniert werden. Da jedoch mehrere bewegte Materialabgabevorrichtungen vorhanden sind, muss der Sensor zwischen diesen unterscheiden können, damit er jedem ein korrektes Signal zuordnen kann. Da die jeweiligen auf einer Kreisbahn bewegten Materialabgabevorrichtungen auf der Umfangslinie den größten Abstand zueinander haben, ist es vorteilhaft, wenn der Sensor nahe der Umlaufbahn der Materialabgabevorrichtungen vorgesehen und auf diesen ausgerichtet ist.

Um sicher zu stellen, dass das ermittelte Geräusch auch tatsächlich in Zusammenhang mit einem Wickelbetrieb steht, wird gleichzeitig ermittelt, ob und mit welcher Frequenz sich der Rotor mit dem Material dreht. Auf diese Weise wird nicht nur vermieden, dass irrtümlich ein Materiallauf angenommen wird, wenn z. B. das Material anstatt infolge eines Wickelvorgangs von Laufrädern einer fahrenden Wickelvorrichtung mitgenommen wird; es wird vielmehr auch erkannt, dass eine sonstige Störung vorliegt, wenn ohne Drehbewegung des Rotors ein solches Geräusch auftritt.

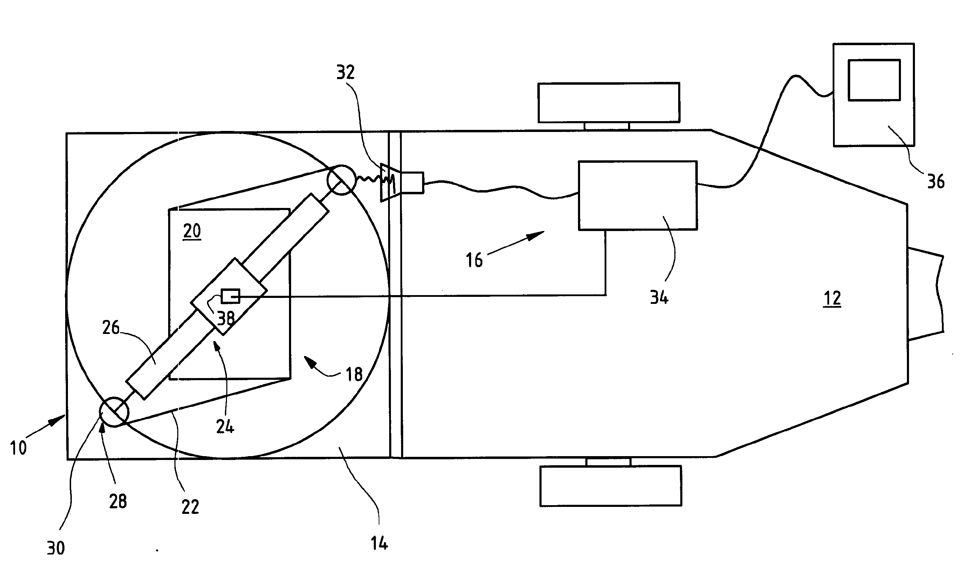

In der Zeichnung ist ein nachfolgend näher beschriebenes Ausführungbeispiel der Erfindung dargestellt. Die einzige Figur der Zeichnung zeigt in sehr schematischer Darstellung eine Wickelvorrichtung in Verbindung mit einer Presse in Draufsicht mit einer erfindungsgemäßen Vorrichtung zum Überwachen des Laufs von bahnförmigem Material.

In der Zeichnung ist eine an sich bekannte Wickelvorrichtung 10 zusammen mit einer Presse 12 gezeigt, die gemeinsam von einem Rahmen 14 getragen werden. Die Wickelvorrichtung 10 ist mit einer erfindungsgemäßen Vorrichtung 16 zum Überwachen des Laufs von bahnförmigem Material versehen, die ebenfalls schematisch als elektrischer Kreislauf dargestellt ist.

Die Wickelvorrichtung 10 ist in bekannter Weise mit einem Wickeltisch 18 und einem Rotor 24 versehen. Die Wickelvorrichtung 10 kann auch vollkommen unabhängig von der Presse 12 betrieben und ausgebildet werden.

Der Wickeltisch 18 steht fest oder ist verfahrbar und dient der Aufnahme eines in diesem Fall als Ballen ausgebildeten Wickelgegenstands 20 zum Bewickeln mit Material 22. Der Wickeltisch 18 enthält ein nicht gezeigtes Transportband, das einen auf ihm liegenden Wickelgegenstand 18 um eine quer zur Fahrtrichtung verlaufende Achse dreht.

Bei dem Material 22 handelt es sich in diesem Fall um Streckfolie, die verwendet wird, um den Wickelgegenstand 20 luftdicht zu verpacken und die mit einer Klebeschicht versehen ist oder deren Lagen aufgrund von Adhäsion aufeinander haften. Während der Aufbringung auf den Wickelgegenstand 20 wird das Material 22 erheblich vorgespannt. In anderen Anwendungsfällen kann das Material 22 auch eine gewöhnliche Folie, ein Netz oder dergleichen sein. Das Material 22 entwickelt während des Abwickelns von einer Rolle 30 ein typisches Geräusch mit einem bestimmten Frequenzspektrum, das bei jedem Material unter gleichbleibenden Abzugsbedingungen gleich ist und definiert werden kann. Bei einer Streckfolie, deren Lagen auf der Rolle 30 aneinander haften, entsteht ein schnarrendes, reißendes Geräusch, das relativ laut ist.

Der Rotor 24 ist in diesem Ausführungsbeispiel mit zwei diametral gegenüberliegenden Armen 26 versehen, an deren äußeren Endbereichen jeweils eine Materialabgabevorrichtung 28 angebracht ist, die das Material 22 üblicherweise in Rollenform enthält. Die Materialabgabevorrichtungen 28 sind sehr vereinfacht dargestellt und zeigen nur die Rolle 30, auf der das Material 22 aufgewickelt ist. Materialhalter, Schneidevorrichtung und Streckrollen sind hingegen nicht gezeigt, da sie für die Erfindung nicht bedeutend und an sich hinlänglich bekannt sind. Aus der Zeichnung ist zu entnehmen, daß die Materialabgabevorrichtungen 28 und mit ihnen die Rollen 30 auf einer im Wesentlichen horizontalen Kreisbahn bewegt werden. Der Rotor 24 wird nur während des Wickelvorgangs angetrieben und zwar mit einer konstanten Geschwindigkeit, die auf die des Transportbands in dem Wickeltisch 18 abgestimmt ist, so dass beim Wickelvorgang eine gleichmäßige Überlappung des Materials 22 auf dem Wickelgegenstand 20 erreicht wird.

Die Vorrichtung 16 zum Überwachen des Laufs von bahnförmigem Material 22 enthält einen Sensor 32, eine Signalverarbeitungsvorrichtung 34 und in diesem Fall ein Endgerät 36, sowie Verbindungen zwischen diesen - Drahtverbindungen, drahtlose oder CAN-Bus. Diese Vorrichtung 16 ist Teil von oder Zusatz zu einer ohnehin auf der Wickelvorrichtung 10 oder der Presse 12 vorhandenen nicht gezeichneten Steuer- oder Regelvorrichtung.

Der Sensor 32 ist in der Art eines Mikrofons ausgebildet, das Schallwellen aufnimmt und in elektrische analoge oder digitale Signale umwandelt. Für die Zwecke dieser Erfindung handelt es sich vorzugsweise um einen Sensor 32 im Ultraschallbereich; liegt das zu verarbeitende Frequenzspektrum woanders, muss selbstverständlich ein anderer Sensor verwendet werden. Der Sensor 32 ist so angeordnet, dass sich jede Materialabgabevorrichtung 28 beim Umlauf des Rotors 24 möglichst nahe an ihm vorbei bewegt. Es wird folglich pro Materialabgabevorrichtung 28 und pro Umdrehung zu einer bestimmten Zeit die höchste Amplitude des Geräuschs erfasst werden können. Wahlweise kann der Sensor 32 verstellbar an dem Rahmen 14 angebracht sein, so dass er optimal auf die Geräuschquelle ausgerichtet werden kann.

Die Signalverarbeitungsvorrichtung 34 stellt den Oberbegriff für alle erforderlichen insbesondere elektrischen Komponenten dar, die erforderlich sind, aus dem Geräusch des Materials 22 ein elektrisches Signal zu bilden, das zu einer Anzeige bzw. einem Alarm, z. B. an dem Endgerät 36 oder zu einer Veränderung bzw. Unterbrechung des Antriebs des Rotors 24 verwendet werden kann. Selbstverständlich müssen diese Komponenten nicht kompakt in einer Einheit zusammengefasst sein, sondern sie können getrennt an geeigneten Stellen an der Wickelvorrichtung 10, der Presse 12 und/oder gar auf einem nicht gezeigten Zugfahrzeug untergebracht sein. Zu den üblichen und wesentlichen Komponenten gehören Analog-Digitalwandler, Verstärker, Filter, Zeitglieder, Schalter, möglicherweise Speicher und dergleichen auf elektrischer oder elektronischer Basis. In der Signalverarbeitungsvorrichtung 34 ist ein soft- oder hardwaremäßiges Programm enthalten, das prüft, ob der Rotor 24 angetrieben wird und ob ein Geräusch von der Rolle 30 stammt oder nicht. Die Signalverarbeitungsvorrichtung 34 ist insbesondere in der Lage, z. B. an der Klarheit oder Stärke des empfangenen Geräuschs zu erkennen, ob das Signal von dem Material 22 oder z. B. von einem mechanischen Teil, z. B. bei einem Lagerschaden oder dergleichen stammt. Es wird somit insbesondere pro Umdrehung des Rotors 24 und pro Materialabgabevorrichtung 28 ein typisches Geräusch erwartet. Da das Geräusch für die Dauer von fast einer halben Umdrehung des Rotors 24 leiser und dann wieder lauter wird, kann die Signalverarbeitungsvorrichtung 34 z. B mittels eines Zeitglieds erkennen, ob das empfangene Geräusch von dem Material stammt oder nicht.

Das Endgerät 36 kann eine Eingabeeinheit, eine Anzeige, Schalter und dergleichen aufweisen, um die Funktion der Wickelvorrichtung 10 und/oder der Presse 12 zu überwachen und zu steuern.

Schließlich kann an dem Rotor 24 ein Sensor 38 vorgesehen sein, dessen Drehbewegung dieser erkennt.

Die Wickelvorrichtung 10 kann sowohl im landwirtschaftlichen wie auch im industriellen Betrieb eingesetzt werden, wobei in letzterem auch Papier, Stoff oder andere Wickelmaterialien Verwendung finden.

Nach alledem ergibt sich folgende Funktion, wobei davon ausgegangen wird, dass sich auf dem Wickeltisch 18 ein Wickelgegenstand 20 - rund oder quaderförmig - befindet, der gewickelt werden soll.

Zum Ausüben dieses Vorgangs wird entweder automatisch ausgehend von der Signalverarbeitungsvorrichtung 34 oder manuell über das Endgerät 36 das Transportband des Wickeltischs 18 und der Rotor 24 in Drehung versetzt. Zu Beginn der Drehung wird das Material 22 mittels eines nicht gezeigten aber bekannten Anlegers am Wickelgegenstand 20 festgehalten, so dass sofort das beim Abziehen des Materials 22 von der Rolle 30 typische Geräusch entsteht. Wenn sich die Rolle 30 an dem Sensor 32 vorbeibewegt, nimmt dieser das Geräusch auf, wandelt es in ein brauchbares elektrisches Signal um und gibt es in die Signalverarbeitungsvorrichtung 34 weiter, es sei denn, die Umwandlung erfolgt in dieser. Die Signalverarbeitungsvorrichtung 34 erzeugt aus diesem Signal ein Stellsignal, das den Antrieb des Rotors 24 herabsetzt, unterbricht und/oder ein Warnsignal, das die Bedienungsperson hörbar oder visuell von dem Endgerät 36 erreicht. In einem Fall, in dem die Signalverarbeitungsvorrichtung 34 erkennt, dass nicht mehr alle sondern nur noch einige oder eine der vorhandenen Rollen 30 Material 22 abgeben, kann die Signalverarbeitungsvorrichtung 34 auch ein Signal absetzen, das den Antrieb des Rotors 24 oder des Transportbands auf dem Wickeltisch 18 verlangsamt, so dass die gewünschte Überlappung des Materials 22 auf dem Wickelgegenstand 20 erhalten bleibt.

## Patentansprüche

1. Wickelvorrichtung (10) mit:
a) einem Rahmen (14),
b) einem an diesem und relativ zu einem Wickelgegenstand (20) bewegbaren Rotor (24) mit mehreren voneinander beabstandeten, Material (22) tragenden Materialabgabevorrichtungen (28),
c) einer Signalverarbeitungsvorrichtung (34) zum Verändern des Antriebs des Rotors (24) in Abhängigkeit von der Anzahl der mittels des Sensors (32) als betriebsbereit erkannten Materialabgabevorrichtungen (28) und .
d) einer Vorrichtung (16) zum Überwachen des Laufs von bahnförmigem Material (22) zwischen zwei beabstandeten Stellen in dem Bahnlauf mittels wenigstens eines an dem Rahmen (14) vorgesehenen Sensors (32),
**dadurch gekennzeichnet, dass**
e) der Sensor (32) zum Erkennen eines typischen Geräusches bei der Bewegung des Materials (22) und Liefern eines entsprechenden Signals vorgesehen ist, das zur Veränderung bzw. Unterbrechung des Antriebs des Rotors (24) verwendet werden kann.

2. Wickelvorrichtung nach Anspruch 1, **dadurch gekennzeichnet, dass** der Sensor (32) im Ultraschallbereich funktioniert.

3. Wickelvorrichtung nach Anspruch 1 oder 2, **dadurch gekennzeichnet, dass** der Sensor (32) mit einer Signalverarbeitungsvorrichtung (34) verbunden ist, in der das Signal vorzugsweise gefiltert und/oder in seiner Stärke verändert wird.

4. Wickelvorrichtung nach einem oder mehreren der vorherigen Ansprüche, **dadurch gekennzeichnet, dass** der Sensor (32) in den Umlaufkreis der Materialabgabevorrichtungen (28) gerichtet ist.

5. Wickelvorrichtung nach Anspruch 4 oder 5, **dadurch gekennzeichnet, dass** die Signalverarbeitungsvorrichtung (34) mit einem Sensor (38) zur Erfassung der Drehbewegung des Rotors (24) verbunden ist.

## Claims

1. Winding apparatus (10), with:
a) a frame (14),
b) a rotor (24) which is movable on said frame and relative to an object to be wound (20) and has a plurality of material delivery devices (28) which are spaced apart from one another and carry material (22),
c) a signal-processing device (34) for changing the drive of the rotor (24) as a function of the number of material delivery devices (28) identified by means of the sensor (32) as being ready for operation, and
d) a device (16) for monitoring the run of sheet-like material (22) between two spaced-apart points in the sheet run by means of at least one sensor (32) provided on the frame (14),
**characterized in that**
e) the sensor (32) is provided for identifying a typical noise during the movement of the material (22) and for supplying a corresponding signal which can be used to change or interrupt the drive of the rotor (24).

2. Winding apparatus according to Claim 1, **characterized in that** the sensor (32) functions in the ultrasound range.

3. Winding apparatus according to Claim 1 or 2, **characterized in that** the sensor (32) is connected to a signal-processing device (34) in which the signal is preferably filtered and/or the strength thereof changed.

4. Winding apparatus according to one or more of the preceding claims, **characterized in that** the sensor (32) is directed into the revolving circuit of the material delivery devices (28).

5. Winding apparatus according to Claim 4 or 5, **characterized in that** the signal-processing device (34) is connected to a sensor (38) for detecting the rotational movement of the rotor (24).

## Revendications

1. Dispositif d'enroulement (10), comprenant :
a) un cadre (14),
b) un rotor (24) déplaçable sur celui-ci et par rapport à un objet d'enroulement (20), comprenant plusieurs dispositifs de distribution de matériau (28) portant un matériau (22), espacés les uns des autres,
c) un dispositif de traitement des signaux (34) pour modifier l'entraînement du rotor (24) en fonction du nombre de dispositifs de distribution de matériau (28) détectés comme aptes au fonctionnement au moyen du capteur (32) et
d) un dispositif (16) pour surveiller l'avance du matériau en forme de bande (22) entre deux endroits espacés dans l'avance de la bande au moyen d'au moins un capteur (32) prévu sur le cadre (14),
**caractérisé en ce que**
e) le capteur (32) est prévu pour reconnaître un bruit typique lors du déplacement du matériau (22) et de la fourniture d'un signal correspondant, qui peut être utilisé pour modifier ou interrompre l'entraînement du rotor (24).

2. Dispositif d'enroulement selon la revendication 1, **caractérisé en ce que** le capteur (32) fonctionne dans la plage des ultrasons.

3. Dispositif d'enroulement selon la revendication 1 ou 2, **caractérisé en ce que** le capteur (32) est connecté à un dispositif de traitement des signaux (34) dans lequel le signal est de préférence filtré et/ou modifié en intensité.

4. Dispositif d'enroulement selon l'une quelconque ou plusieurs des revendications précédentes, **caractérisé en ce que** le capteur (32) est orienté dans le circuit des dispositifs de distribution de matériau (28).

5. Dispositif d'enroulement selon la revendication 4 ou 5, **caractérisé en ce que** le dispositif de traitement des signaux (34) est connecté à un capteur (38) pour détecter le mouvement de rotation du rotor (24).
